# EUROPEAN PATENT APPLICATION

(11) **EP 4 130 604 A1**
(43) Date of publication of application: **08.02.2023**
(21) Application number: 22000189.5
(22) Date of filing: 01.08.2022
(51) Int. Cl.: F24S 40/80, H02S 20/30

(54) **LIGHT UNIT**

(30) Priority: 03.08.2021 SE 2130212
(71) Applicant: FEBY AB, 331 35 Värnamo (SE)
(72) Inventor: Ferman, Magnus, 33154 Värnamo (SE)

(57) **Abstract**

Light installation (16) comprising a support structure (10) for supporting at least one solar panel (20), whereby the support structure (10) comprises a plurality of vertical struts (12, 12e). The support structure (10) comprises a plurality of cross members (14, 14a, 14b), whereby each cross member (14, 14a, 14b) is arranged to be connected to at least two vertical struts (12, 12e) of the plurality of vertical struts (12, 12e), and at least one cross member (14, 14a, 14b) is arranged to support at least one solar panel (20) in a first operative position (26) thereon. The support structure (10) is arranged to bear the load of the at least one solar panel (20) when each cross member (14, 14a, 14b) of the plurality of cross members (14, 14a, 14b) has been connected to the at least two vertical struts (12, 12e) of the plurality of vertical struts (12, 12e). The support structure (10) comprises at least one spring-loaded hinge (24) that is arranged to allow movement of the at least one solar panel (20) about a predefined axis, whereby the spring-loaded hinge (24) includes a resilient element, such as a spring, and the support structure (10) is arranged so that the at least one solar panel (20) moves from the first operative position (26) to a retracted position (28) when subjected to meteorological loading and returns to the first operative position (26) under the action of elastic potential energy stored in the resilient element when the meteorological loading is removed.

## Description

### TECHNICAL FIELD

The invention concerns a light installation comprising a support structure for supporting at least one solar panel, whereby the support structure comprises at least one spring-loaded hinge that is arranged to allow movement of the at least one solar panel about a predefined axis. The invention also concerns a method for providing a light installation and a method for retrofitting a support structure.

### BACKGROUND OF THE INVENTION

It is known to mount a solar panel on the lamppost of light installation and use the solar panel together with a re-chargeable battery to power an electric lamp at the top of the lamppost. It is also known to mount a plurality of solar panels on a lamppost of a streetlight so as to maximize the amount of electricity that can be generated and supplied to an electricity grid.

For example, South Korean patent application no. KR20190095731A discloses a light installation solar cell panel mounting fixture which is easily installable and constructed to support a plurality of solar cell panels on a lamppost of a streetlight. The mounting fixture is designed to be mounted on a lamppost of an existing streetlight so that the whole lamppost does not have to be replaced.

If one or more solar panels are mounted on an existing lamppost of a streetlight, the lamppost must however be strong enough to bear the weight and wind load of the mounting fixture and the solar panels mounted on it since mounting fixtures, such as the mounting fixture disclosed in KR20190095731A, do not contribute to the strength of the lamppost, but add extra weight to the streetlight that the lamppost must bear.

Furthermore, a light installation on which a plurality of solar panels is mounted can be subjected to meteorological loading, such as high winds, heavy rain, and/or excessive snow or ice loading. Meteorological loading can damage light installation and solar panels mounted on them if the light installations are not strong enough to withstand the meteorological loading.

US patent application no. US 2013340807A1 discloses a foldable solar tracking assembly that includes a spine and a plurality of paired brackets connected to the spine. The brackets are positioned on opposite sides of the spine and at least one of the paired brackets includes wheels to allow rolling movement of the spine. An array arm is attached to each bracket and is moveable from a folded shipping position to an unfolded deployed position, and at least one solar array panel is secured to each array arm. A wind sensor, such as an anemometer, is coupled on, or in proximity to, the assembly. Data from the wind sensor is sent to a control system. If an excessive amount of wind is detected, then a slip clutch passively disengages a driven disk from a drive motor so as to allow the spine to rotate so that the wind forces applied to the solar array panels are reduced. Once the wind forces are below a predetermined threshold, the drive assembly returns the solar panel assembly to normal sun tracking operation.

US 2013340807A1 thereby provides a solution to the problem of meteorological loading. However, the disclosed solution, which requires the use of a wind sensor, control system, drive motor, and drive mechanism to move solar panel arrays, is complex, costly and time-consuming to install, maintain and repair, and increases the space requirements for the solar tracking assembly.

### SUMMARY OF THE INVENTION

An object of the invention is to provide an improved light installation comprising a support structure for supporting at least one solar panel.

The support structure comprises a plurality of vertical struts, optionally whereby at least one of the vertical struts extends from a surface on which the light installation stands. The support structure also comprises a plurality of cross members, such as a plurality of bracket, whereby each cross member is arranged to be connected to at least two vertical struts of the plurality of vertical struts, and at least one cross member is arranged to support at least one solar panel in a first operative position thereon, i.e. in a first geographical position. The support structure is arranged to bear the load of the at least one solar panel when, i.e. only when, each cross member of the plurality of cross members has been connected to the at least two vertical struts of the plurality of vertical struts.

The cross members of such a support structure form interconnecting, strengthening and stabilizing links between at least two, or three, or four or more vertical struts, which can at least partly bear horizontal loads and thereby enable the support structure to bear the weight of the one or more solar panels that are mounted on the support structure when the support structure is in use. Such a support structure, which constitutes a lightweight load-bearing framework, makes new light installations relatively simple and inexpensive to construct.

The design of such a support structure can contain a compromise for a more favourable general load case where the proximity of the solar panels to a vertically upwardly extending lamppost or struts allows them to shade some part of the active solar panel surface during any part of the brightest half of the day.

The support structure comprises at least one spring-loaded hinge that is arranged to allow movement of the at least one solar panel about a predefined axis, whereby the spring-loaded hinge includes a resilient element, such as a spring, and the support structure is arranged so that the at least one solar panel moves from the first operative position to a retracted position when subjected to meteorological loading and returns to the first operative position under the action of elastic potential energy stored in the resilient element when the meteorological loading is removed.

Elastic potential energy is energy that is stored in the resilient element as a result of the meteorological loading applying a force on the at least one solar panel which acts to deform the resilient element. The energy is stored in the resilient element until the force is removed whereupon the resilient element springs back to its original shape, doing work in the process. The deformation can involve compressing, stretching or twisting the resilient element. The term "resilient element" is intended to mean one or more suitable objects and/or materials that may be at least partially compressed, stretched and/or twisted. The properties of the resilient element may be selected depending on the weight of the at least one solar panel.

According to an embodiment of the invention, one of the plurality of vertical struts is an existing lamppost and at least one other vertical strut of the plurality of vertical struts is arranged to be retrofitted to the existing lamppost. Two, three or more vertical struts may for example be retrofitted to an existing lamppost to make a support structure for supporting at least one solar panel. Optionally, one or more of the vertical struts of the plurality of vertical struts that are retrofitted to the existing lamppost may be arranged to extend from a surface on which the existing lamppost stands, which may be used to strengthen and/or stiffen an existing lamppost, such as a lamppost comprising a lightweight material, such as a lightweight metal alloy, such as an aluminium alloy, plastic, or a composite material. Additionally, such strengthening and/or stiffening of an existing lamppost may improve its safety rating in crash tests.

Such a support structure, provides a lightweight load-bearing framework around an existing lamppost, and constitutes an integrated solar-panel holder that substantially contributes to the strength of an existing lamppost, which means that the existing lamppost does not need to be replaced by a stronger and more expensive lamppost in order to modify it to be able to mount at least one solar panel thereon. The amount of reinforcement provided may be controlled by selecting vertical struts and cross members of suitable dimensions, which not only strengthen the existing lamppost making it able to support the additional weight of mounting at least one solar panel thereon but can also stiffen the existing lamppost. One or more optional vertical struts extending from the surface on which the light installation stands will further strengthen and stabilize the light installation.

According to an embodiment of the invention, at least one vertical strut of the plurality of vertical struts, i.e. one, some, or all of the vertical struts of the plurality of struts, extend(s) from a surface on which the light installation stands, i.e. from a height of 0 metres.

Optionally, at least one vertical strut of the plurality of vertical struts extends from the at least one solar panel down to a point that is located above the surface on which the light installation stands, which point is located along at least one vertical strut that extends from a surface on which the light installation stands. Such a solution may be used if the at least one vertical strut that extends from a surface on which the light installation stands is/are strong enough to bear the weight of the solar panels.

According to an embodiment of the invention at least one vertical strut of the plurality of vertical struts extends from the at least one solar panel down to a point that is located at a height of at least 1 cm up to 3.0 metres, or at least 1 cm up to 2.0 metres, or at least 1 cm up to 1.0 metre, above the surface on which the light installation stands.

According to an embodiment of the invention, at least one of the vertical struts of the plurality of vertical struts is arranged to extend along at least 30%, at least 40%, at least 50%, at least 60%, at least 70%, at least 80%, at least 90%, or 100% of the height of the light installation when the support structure is in use.

According to an embodiment of the invention, the support structure is arranged to support a plurality of solar panels vertically one above the other, or in pairs or groups, one pair or group above another, at a plurality of different heights, or in a staggered manner in any desired number or arrangement.

According to an embodiment of the invention, at least one vertical strut of the vertical struts and/or at least one cross member of the plurality of cross members comprises or consist of transparent material.

According to an embodiment of the invention, the support structure comprises at least one light-reflecting surface, such as a mirror or prism, to counteract shading of the at least one solar panel's active surface, by one or more parts of the support structure for example. According to an embodiment of the invention, the at least one light-reflecting surface is arranged to be moveable so that the light that it reflects may be directed towards an area that is shaded during a certain part of a day.

According to an embodiment of the invention, at least one of the plurality of vertical struts and/or at least one of plurality of cross members is/are curved, i.e. comprise a curved section. The shape and arrangement of curved vertical struts and/or cross members are selected to utilize the space available for a new light installation, or around an existing lamppost of a light installation as efficiently as possible. For example, one or more curved vertical struts and/or cross members may be used to limit the space required for a support structure of a light installation close to the surface on which the light installation stands, where there may be a shortage of space.

According to an embodiment of the invention, at least one of the plurality of cross members may be hollow. This will not only allow components to be accommodated inside a vertical strut and/or cross member but will also decrease the weight of the support structure making it easier to transport and install, as well as move when in use.

For example, a support structure may comprise at least one hollow vertical strut or cross member inside which one or more components, such cables, sensors, components of a solar tracking mechanism, and/or electronic circuits or devices may be accommodated. If a hollow vertical strut or cross member comprises or consists of transparent material, one or more air vents may be provided in the vertical strut or cross member to prevent or reduce the build-up of condensation inside it, which could also cast a shadow on the at least one solar panel.

According to an embodiment of the invention the support structure comprises at least one closed frame that is arranged to support the at least one solar panel in the first operational position. The at least one closed frame is namely inclined at the same angle as the at least one solar panel when the at least one solar panel is mounted on the support structure. A closed frame may be arranged to surround a solar panel, i.e., to have a shape and size that corresponds to the shape and size of the solar panel. Such a closed frame will protect a solar panel from damage and efficiently transfer forces acting on the at least one solar panel to other parts of the support structure. A closed frame may for example be arranged to transfer diagonally-acting forces to one or more vertical struts of the light installation.

It should be noted that the at least one solar panel supported by the support structure of a light installation according to the invention may be of any shape and size and all of the solar panelts supported by the support structure need not necessarily be of the same shape and/or size. A solar panel may be planar or curved and may comprise any type of photo-voltaic cells, such as crystalline silicon solar cells or a thin film module.

According to an embodiment of the invention the support structure comprises at least one rear cover that is arranged to support the rear side of the at least one solar panel. Such a rear cover reinforces the solar panel that is attached to the rear cover and protects the solar panel from dirt and moisture. The rear cover may seal the solar panel, and/or strengthen or stiffen the solar panel, and or comprise at least one integrated spoiler or at least one spoiler mounted thereon. At least one spoiler may be provided on the at least one solar panel that is supported by the support structure.

According to an embodiment of the invention the predefined axis extends from one side of the, or each, solar panel to an opposing side of the, or each, solar panel and optionally through a centre of the, or each, solar panel. Alternatively, the predefined axis extends from one side of the, or each, solar panel to an opposing side of the, or each, solar panel and optionally through the, or each, solar panel in the vicinity of the centre of the, or each, solar panel. As a further alternative, the predefined axis extends along a side of the, or each, solar panel.

The at least one spring-loaded hinge may namely be located at a centre of at least one side the, or each, solar panel or in the vicinity of the centre of at least one side of the solar panel when the at least one solar panel is mounted on the support structure.

According to an embodiment of the invention the support structure is arranged so that the at least one solar panel rotates from the first operative position to a horizontal retracted position when subjected to meteorological loading in the form of a headwind or a tailwind. According to an embodiment of the invention the support structure comprises at least one spoiler to facilitate such rotation. The at least one spoiler is arranged on the support structure to create a negative pressure or an overpressure above and/or below and/or on and/or around the at least one solar panel so that the at least one solar panel can be rotated. At least one spoiler may be provided on the at least one closed frame to control the air currents in the vicinity of the at least one solar panel.

According to an embodiment of the invention, the support structure is arranged so that the at least one solar panel rotates in the same direction from the first operative position to the horizontal retracted position irrespective of whether it is subjected to a headwind or a tailwind.

According to an embodiment of the invention the support structure is arranged so that the at least one solar panel rotates from the first operative position to a vertical retracted position when subjected to meteorological loading in the form of precipitation. According to an embodiment of the invention the at least one solar panel comprises a precipitation collector to facilitate such rotation. A precipitation collector is preferably configured to collect solid precipitation, such as snow, but to liquid precipitation, such as rain, pass through the precipitation collector. A spoiler is preferably configured so that precipitation does not collect in or around the spoiler.

According to an embodiment of the invention the support structure comprises mechanical fasteners, such as screws, bolts or nails etc., and the at least one solar panel and/or the at least one spoiler is/are attached to the support structure and/or the at least one solar panel by means of the mechanical fasteners or any other suitable fastening means. Alternatively, or additionally, the at least one spoiler may be attached to the at least one solar panel. Alternatively, the at least one spoiler may be integrally formed with part of the support structure or part of a solar panel.

The present invention also concerns a method for providing a light installation, such as a light installation according to any of the embodiments described herein, which comprises the steps of providing a support structure for supporting at least one solar panel, whereby the support structure comprises a plurality of vertical struts, optionally whereby at least one of the vertical struts is arranged to extend from a surface on which the light installation stands, providing a plurality of cross members whereby at least one cross member is arranged to support at least one solar panel in a first operative position thereon, and connecting each cross member to at least two vertical struts of the plurality of vertical struts, whereby the support structure is arranged to bear the load of the at least one solar panel when each cross member of the plurality of cross members has been connected to the at least two vertical struts of the plurality of vertical struts. Such a method may be used to provide a new light installation that is able to support at least one solar panel.

The method also comprises the step of providing the support structure with at least one spring-loaded hinge that is arranged to allow movement of the at least one solar panel about a predefined axis, whereby the spring-loaded hinge includes a resilient element, such as a spring, and the support structure is arranged so that the at least one solar panel moves from the first operative position to a retracted position when subjected to meteorological loading and returns to the first operative position under the action of elastic potential energy stored in the resilient element when the meteorological loading is removed.

This will reduce meteorological loading on a light installation on which at least one solar panel is mounted.

The present invention further concerns a method for providing a light installation, such as a light installation according to any of the embodiments described herein, by retrofitting a support structure for supporting at least one solar panel to an existing lamppost of an existing light installation. The method comprises the steps of providing at least one vertical strut, optionally whereby the at least one of the vertical struts is arranged to extend from a surface on which the light installation stands, providing a plurality of cross members, whereby at least one cross member is arranged to support at least one solar panel in a first operative position thereon, and connecting each cross member to the existing lamppost and the at least one vertical strut, whereby the existing lamppost and the at least one vertical strut constitute a support structure that is arranged to bear the load of the at least one solar panel when each cross member of the plurality of cross members has been connected to the existing lamppost and the at least one vertical strut.

The method also comprises the step of providing the support structure with at least one spring-loaded hinge that is arranged to allow movement of the at least one solar panel about a predefined axis, whereby the spring-loaded hinge includes a resilient element, such as a spring, and the support structure is arranged so that the at least one solar panel moves from the first operative position to a retracted position when subjected to meteorological loading and returns to the first operative position under the action of elastic potential energy stored in the resilient element when the meteorological loading is removed.

Such a method may be used to modify an existing light installation. Solar panels are mounted on an existing lamppost without having to reinforce the existing lamppost, whereby installation, maintenance and repair costs may be kept to a minimum.

The present invention thereby concerns a method for providing a newly produced light installation, and a method for modifying an existing light installation.

The vertical struts and cross members of a support structure may be connected, and/or attached to an existing lamppost by any suitable means, such as by welding or using mechanical fastening means.

The present invention also concerns a mounting device for mounting at least one solar panel in a first operative position on any suitable structural element, such as a vertical strut or pole, whereby the mounting device comprises at least one spring-loaded hinge that is arranged to allow movement of the at least one solar panel about a predefined axis, whereby the spring-loaded hinge includes a resilient element, such as a spring, and the mounting device is arranged so that the at least one solar panel moves from the first operative position to a retracted position when subjected to meteorological loading and returns to the first operative position under the action of elastic potential energy stored in the resilient element when the meteorological loading is removed.

According to an embodiment of the invention the predefined axis extends from one side of the, or each, solar panel to an opposing side of the, or each, solar panel optionally through a centre of the, or each, solar panel or through the, or each, solar panel in the vicinity of the centre of the, or each, solar panel.

According to an embodiment of the invention the method comprises the step of arranging the support structure so that the at least one solar panel rotates from the first operative position to a horizontal retracted position when subjected to meteorological loading in the form of a headwind or a tailwind and providing the support structure with at least one spoiler to facilitate the rotation.

According to an embodiment of the invention the method comprises the step of arranging the support structure so that the at least one solar panel rotates from the first operative position to a vertical retracted position when subjected to meteorological loading in the form of precipitation and providing the at least one solar panel with a precipitation collector to facilitate the rotation.

According to an embodiment of the invention the method comprises the step of attaching the at least one solar panel and/or the at least one spoiler to the support structure by means of mechanical fasteners or any other suitable fastening means.

### Definitions

The term "light installation" as used herein is intended to mean any raised source of light. For example, a light installation may be used to illuminate at least part of a road, street, railway, path, building, bridge, stadium, sign, such as a road or street sign etc. The light installation need not necessarily only be used to provide illumination when there is little or no ambient light, such as at dusk, dawn, at night or due to dark weather conditions. The light installation may constitute a spotlight, or part of a road or street sign, an antenna, a camera, and/or a sensor.

The term "lampost" as used herein is intended to mean any post supporting a usually outdoor light, such as one or more electric lamps.

The term "vertical strut" as used herein is intended to mean a strut that is arranged at a right angle to a horizontal plane, such as a surface (the ground or the floor or a platform or a base) on which a light installation stands, or a strut that extends in a direction or has an alignment such that the top of the strut is directly above the bottom of the strut when the support structure has been constructed and is in use. The term "vertical strut" is also intended to include "a substantially vertical strut" that is not completely, but substantially vertical.

The term "operative position" is intended to mean a suitable or optimum geographical position of a solar panel, which may depend on the geographical location of the solar panel and/or a time day and/or year. For example, for a streetlight located in the northern hemisphere, an operative position of a solar panel may be south-facing with an angle of ±180° in relation to the streetlight direction. A first operative position may for example have an inclination of 20-70° from a horizontal plane. A first operative position may for example have an inclination of 45° from a horizontal plane.

The term "retracted position" is intended to mean a position that is substantially more aerodynamic than the operative position. The at least one solar panel will be moved to such a position when subjected to meteorological loading, i.e. when a force, which is for example produced by strong winds, heavy rain, excessive snow and/or ice loading, acts on the at least one solar panel. The magnitude of the force required to move the at least one solar panel to a retracted position may be selected by selecting a resilient element having the desired properties. The at least one solar panel will return to its operative position when it is no longer being subjected to that force, for example when the high winds or heavy rain have stopped or decreased in intensity, and/or when snow or ice has been removed from the at least one solar panel. Snow or ice may for example melt or be dumped from the surface of the at least one solar panel as a result of the movement of the at least one solar panel. If there is no meteorological loading, the at least one solar panel will be held in the operative position.

The term "light-reflecting surface" is intended to mean any material or object, such as a mirror, a piece of glass or other transparent material cut with precise angles and plane faces, such as a prism, to reflect light towards the at least one solar panel and thereby maximize the light that falls on each solar panel. The yield obtained from a solar panel may thereby be maximised.

### BRIEF DESCRIPTION OF THE DRAWINGS

The invention will hereinafter be further explained by means of non-limiting examples with reference to the appended figures where;
- Figure 1: shows parts of support structures according to embodiments of the invention,
- Figures 2-7: show light installations according to embodiments of the invention,
- Figures 8 & 9: show parts of support structures supporting at least one solar panel according to embodiments of the invention,
- Figure 10: shows the steps of methods according to embodiments of the invention,
- Figure 11: shows a mounting device according to an embodiment of the invention,
- Figure 12: shows part of the support structure of the light installation illustrated in Figure 3 with spoilers located on the support structure,
- Figure 13: shows a solar panel that may be supported by a support structure of a light installation according to an embodiment of the invention,
- Figure 14: shows the positions between which at least one solar panel may be moved when mounted on the support structure of a light installation according to an embodiment of the invention,
- Figure 15: shows solar panels supported by a support structure of a light installation according to an embodiment of the invention in a first operational position and two retracted positions,
- Figure 16: shows a solar panel supported by a support structure of a light installation according to an embodiment of the invention, and
- Figures 17 & 18: show support structures of a light installation according to embodiments of the invention.

It should be noted that the drawings have not necessarily been drawn to scale and that the dimensions of certain features may have been exaggerated for the sake of clarity.

A number of embodiments of the invention are described in the following section. It should however be noted that any feature of the support structure, light installation, method or mounting device according to any embodiment of the invention may be combined with any one or more features of any other embodiment of the invention described or derivable from this document.

### DETAILED DESCRIPTION OF EMBODIMENTS

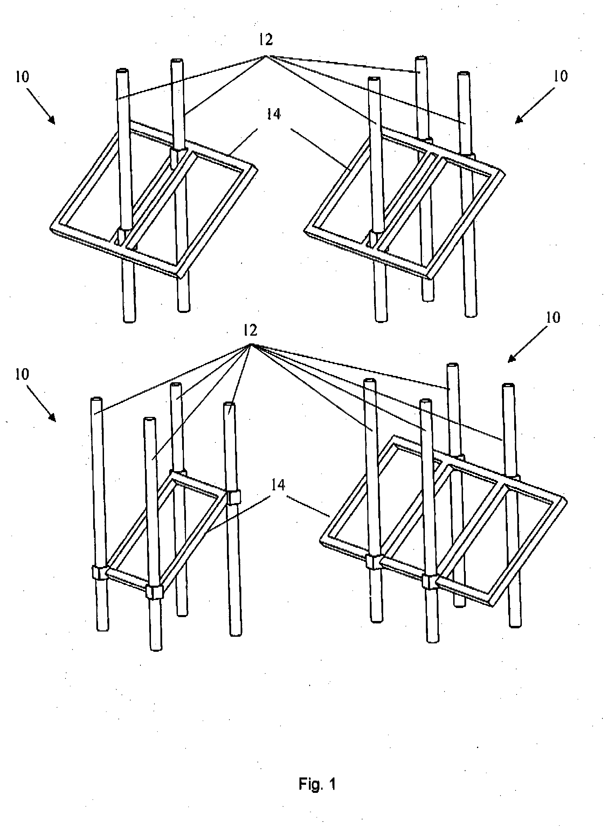

Figure 1 shows parts of support structures 10 of light installations according to various embodiments of the invention. Each support structure 10 is arranged to support at least one solar panel. Each support structures 10 consists of a plurality of vertical struts 12, namely two, three or four vertical struts 12. A support structure 10 of a light installation according to the present invention can however comprise more than four vertical struts 12, such as five, six, seven, eight, nine, ten or more vertical struts 12.

Each support structure 10 also comprises a plurality of cross members 14, such as the cross members 14 shown in figure 1, whereby each cross member 14 is arranged to be connected to at least two or three or four vertical struts 14, and whereby at least one, some, or all of the cross members 14 are arranged to support at least one solar panel in a first operative position thereon. The support structure 10 is arranged to bear the load of at least one solar panel when each cross member 14 of the plurality of cross members 14 has been connected to at least two vertical struts 14. A support structure 10 of a light installation 16 according to the invention may have any number of cross members 14, such as two, three, four, five, six, seven, eight, nine, ten or more cross members 14.

A support structure 10 of a light installation 16 according to the invention may comprise vertical struts 12 and/or cross members 14 such as pipes comprising or consisting of a plastic or a metal, such as steel or aluminium, such as galvanized steel or extruded aluminium, or any other suitable material or materials.

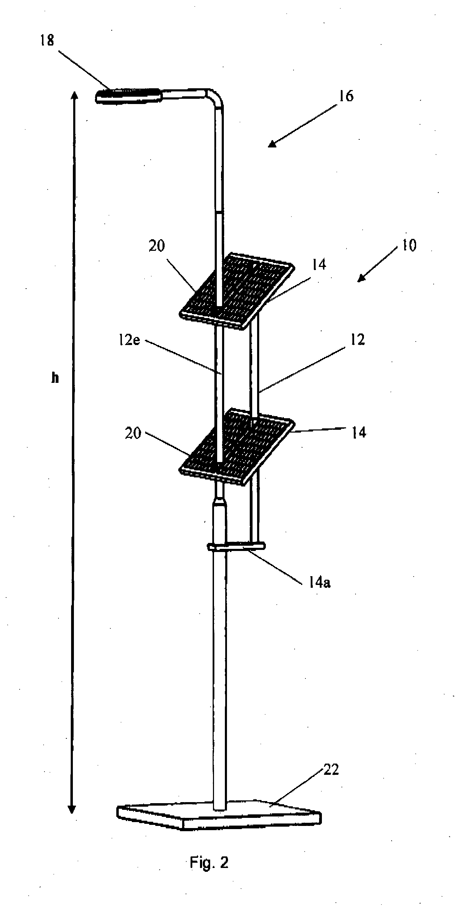

Figure 2 shows a light installation 16 comprising a support structure 10 for four solar panels 20 arranged in pairs, one pair above the other. The support structure 10 consists of two vertical struts 12 and 12e, where 12e is an existing lamppost 12e of an existing light installation 16 and a vertical strut 12 is retrofitted to the existing lamppost 12e of the light installation 16. The lamppost 12e extends from a surface 22 on which the light installation 16 stands up to illumination means 18, such as an electric lamp. The vertical strut 12 retrofitted the existing lamppost 12e extends from a point above the surface 22 on which the light installation 16 stands.

A vertical strut 12 according to any of the embodiments of the invention may extend along at least 30% and up to 100% of the height, h, of light installation 16, when the support structure 10 is in use. A plurality of solar panels 20 may be connected to at least two vertical struts 12, 12e at any desired location or locations along the height of the light installation 16.

In the illustrated embodiment, the support structure 10 comprises a cross member 14a that is not arranged to support at least one solar panel 20 thereon, but which is connected to the two vertical struts 12e and 12 to strengthen support structure 10.

The support structure 10 shown in Figure 2 may be provided with at least one spring-loaded hinge (not shown) that is arranged to allow movement of at least one, some, or all of the solar panels 20 about a predefined axis to provide a light installation according to the present Invention.

A light installation 16 according to the present invention can be any type of outdoor light installation, such as a streetlight, parking space lighting, industrial estate lighting, sports venue lighting, traffic area lighting, harbour lighting etc,

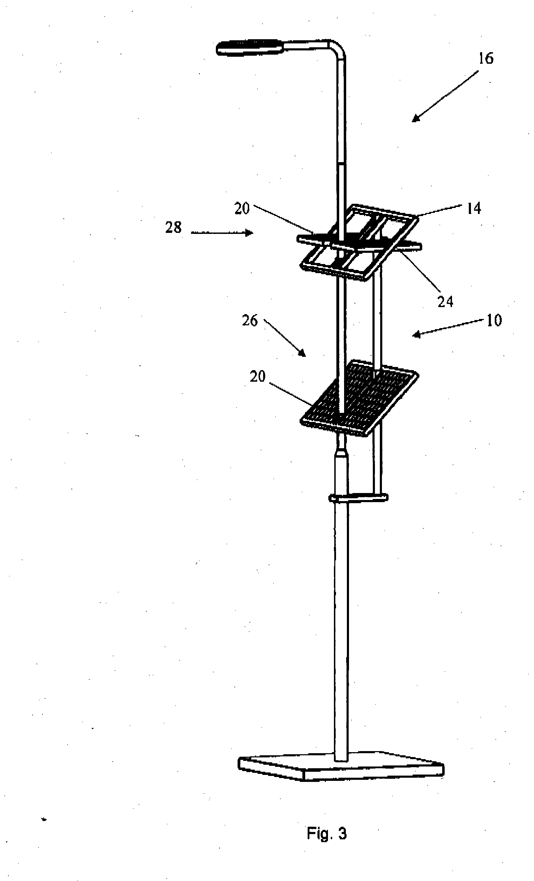

Figure 3 shows that the upper pair of solar panels 20 are not fixedly mounted on the cross members 14. Instead, the support structure 10 comprises at least one spring-loaded hinge 24 that is arranged to allow movement of the upper pair of solar panels 20 about a predefined axis.

The spring-loaded hinge 24 includes a resilient element, such as a spring, and the support structure 10 is arranged so that the solar panels 20 move from a first operative position 26, such as a south-facing operative position, (see the position of the lower pair of solar panels in Figure 3) to a retracted position 26 (see the position of the upper solar panels in Figure 3) when subjected to meteorological loading. The solar panels 20 return to the first operative position 26 under the action of elastic potential energy stored in the resilient element of the spring-loaded hinge 24 when the meteorological loading is removed. At least one, some, or all of the solar panels 20 mounted on a light installation 16 according to the present invention may be provided with at least one such spring-loaded hinge 24 and be moveable in this way.

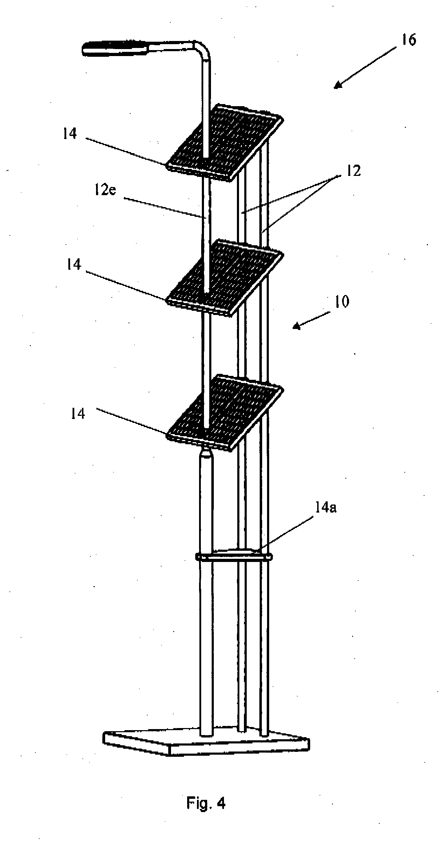

Figure 4 shows a light installation 16 having a support structure 10 consisting of three vertical struts 12 and 12e, whereby two vertical struts 12 have been retrofitted to an existing lamppost 12e of the light installation 16 which thereby constitutes the third vertical strut 12e of the support structure 10 of the light installation 16. In the illustrated embodiment, six solar panels 20 are mounted in pairs, one pair vertically above the other.

The support structure 10 shown in Figure 4 may be provided with at least one spring-loaded hinge (not shown) that is arranged to allow movement of at least one, some, or all of the solar panels 20 about a predefined axis to provide a light installation according to the present invention.

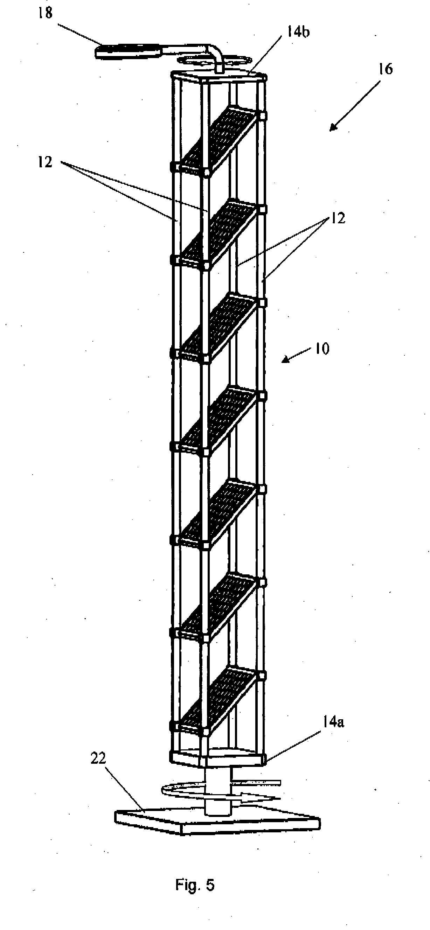

Figure 5 shows a light installation 16 having a support structure 10 consisting of four vertical struts 12 in which none of the vertical struts extend from the surface 22 on which the light installation 16 stands but extend upwards from a point above that surface 22. The light installation 16 is self-supporting 16 and is not retrofitted to an existing lamppost. In the illustrated embodiment, seven solar panels 20 are mounted one above the other at different heights on the support structure 10.

The support structure 10 shown in Figure 5 may be provided with at least one spring-loaded hinge (not shown) that is arranged to allow movement of at least one, some, or all of the solar panels 20 about a predefined axis to provide a light installation according to the present invention.

In a light installation 16 according to the present invention, solar panels 20 do not necessarily need to be mounted on the light installation 16 in a uniformly spaced regular manner as shown in figure 5 but may be mounted in any desired way. In the illustrated embodiment, the entire support structure 10 is arranged to be rotatable so as to enable the solar panels 20 to be moved together at the same time from a first operative position to at least a second operative position to ensure optimal exposure of the solar panels' active surfaces to the sun. A non-rotatable part of the support structure 10 may be secured to the surface 22 on which the light installation 16 stands. Alternatively, an entire light installation 16 according to the present invention may be arranged to be rotatable. According to an embodiment of the invention the illumination means 18 of a light installation 16 according to any of the embodiments of the invention may be arranged to be independently rotatable in any direction.

It should be noted that not all solar panels 20 held by a support structure 10 of a light installation 16 according to the invention necessarily need to face the same direction.

It should also be noted that any part or parts of a support structure 10, or the whole of the support structure 10, of a light installation 16 according to the present invention may be arranged to be rotatable. For example, if at least one vertical strut 12 of a support structure 10 has been retrofitted to an existing lamppost 12e to form a support structure 10, at least part of the support structure 10 may be arranged to be rotatable with respect to the existing lamppost 12e. A support structure 10 of a light installation 16 according to the present invention may however be arranged to be completely non-rotatable.

In the illustrated embodiment, the support structure 10 comprises two optional cross members 14a and 14b that are not arranged to support at least one solar panel 20 thereon but are arranged below the lowest solar panel and above the highest solar panel respectively in order to strengthen the support structure 10. One or more of these optional cross members 14a and 14b may be included in a support structure 10 of a light installation 16 according to any embodiment of the present invention.

According to an embodiment of the invention, one or more solar panels 20 may arranged to be located entirely within the plurality of vertical struts 12, 12e of the support structure 10 when the support structure 10 is in use.

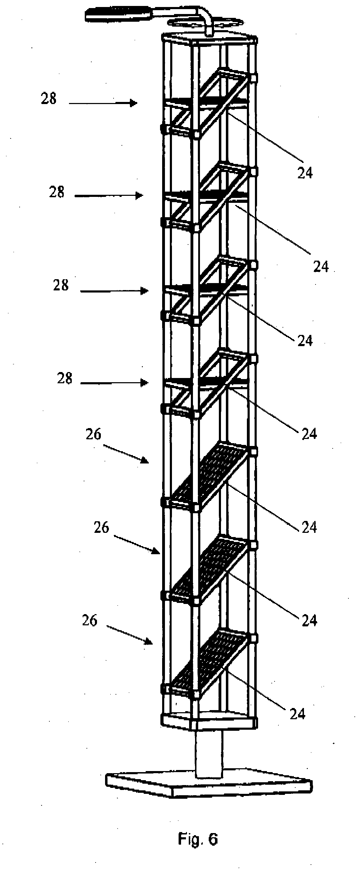

Figure 6 shows a light installation 16 in which a plurality of spring-loaded hinges 24 are arranged to allow movement of each solar panel 20 about a predefined axis from a first operative position 26 to a retracted position 28.

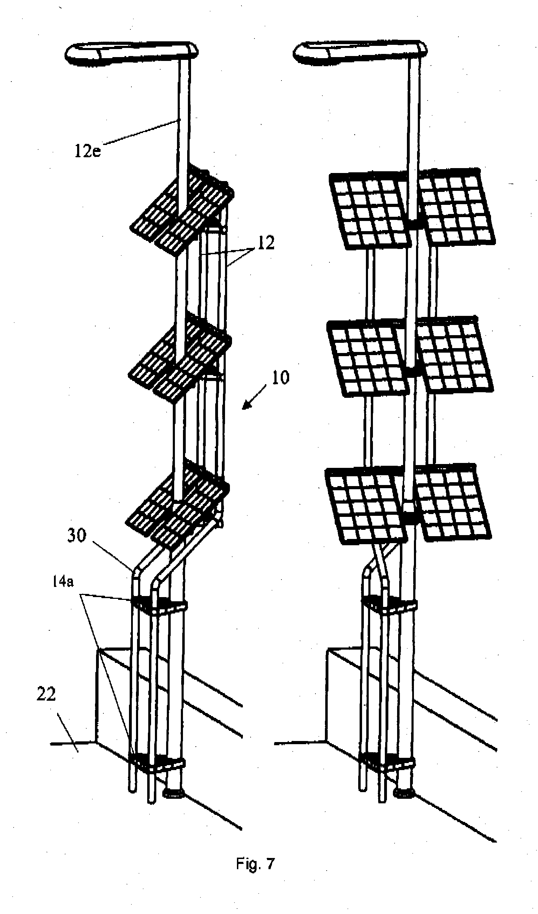

Figure 7 shows a light installation 16 comprising curved vertical struts 12, i.e. vertical struts comprising at least one curved section 30. The shape and arrangement of the curved vertical struts 12 of the support structure 10 are selected to utilize the space available around an existing lamppost 12e of a light installation as efficiently as possible, for example to limit the space required for the support structure 10 close to the surface 22 on which the light installation 16 stands.

In an embodiment in which three vertical struts 12 are used, curved vertical struts 12 may be used. Only a single variant of a curved vertical strut 12 would be needed to be able to cover a geographical rotation of 270° (for the remaining 90°, non-curved vertical struts 12 may be used). Such a solution means that the vertical struts 12 that are fitted to a lamppost 12e may be arranged to be located in a predetermined desired position at the lower part of the light installation 16, (for example, in front of the existing lamppost 12e, if there is no space behind the existing lamppost 12e). Such an arrangement is possible if the two vertical struts 12 which are fitted to the lamppost 12e have a symmetrical triangular arrangement (when viewed from above) on the cross-members 14 and 14a. The cross members 14a which are not arranged to support at least one solar panel 20 thereon can then be rotated in 90° steps and the curved vertical struts can be used, in different configurations, to rotate the lower part of the installation, in 90° steps so that a rotation of 90° or 180° or 270° can be selected. Such a solution makes it easy to position solar panels 20 in the operational position on streetlights that are located along a curve in the street and the lower part of the installation needs to be located at a specific position.

Furthermore, curved vertical struts could also be used to follow general bends on an existing lamppost.

According to an embodiment of the invention at least part of at least one of the plurality of vertical struts 12 of the support structure 10 is hollow.

In an embodiment of the invention at least part of at least one of the plurality of cross-members 14 is curved to follow the extension of curved solar panels 20 and/or to provide various selectable operational positions for the solar panels.

The support structure 10 shown in Figure 7 may be provided with at least one spring-loaded hinge (not shown) that is arranged to allow movement of at least one, some, or all of the solar panels 20 about a predefined axis to provide a light installation according to the present invention.

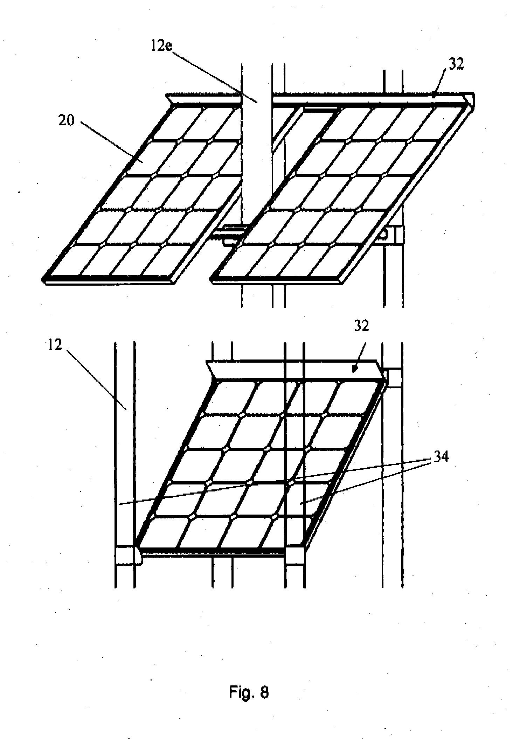

Figure 8 shows a part of two support structures 10 which comprise a light-reflecting surface 32 and transparent material 34. The support structures 10 according to any of the embodiments of the invention may comprise at least one light-reflecting surface 32, such as a mirror or prism, in any suitable location to counteract shading of the at least one solar panel's active surface. Alternatively, or additionally, at least one vertical strut 12 of the vertical struts of a support structure 10 and/or at least one cross member 14 of a plurality of cross members may comprise, or consist of transparent material 34 to counteract shading of the at least one solar panel's active surface. For example, the foremost vertical strut or strus 12 of a support structure 10 may comprise or consist of transparent material 34, as shown in figure 8.

The support structure 10 shown in Figure 8 may be provided with at least one spring-loaded hinge (not shown) that is arranged to allow movement of at least one, some, or all of the solar panels 20 about a predefined axis to provide a light installation according to the present invention.

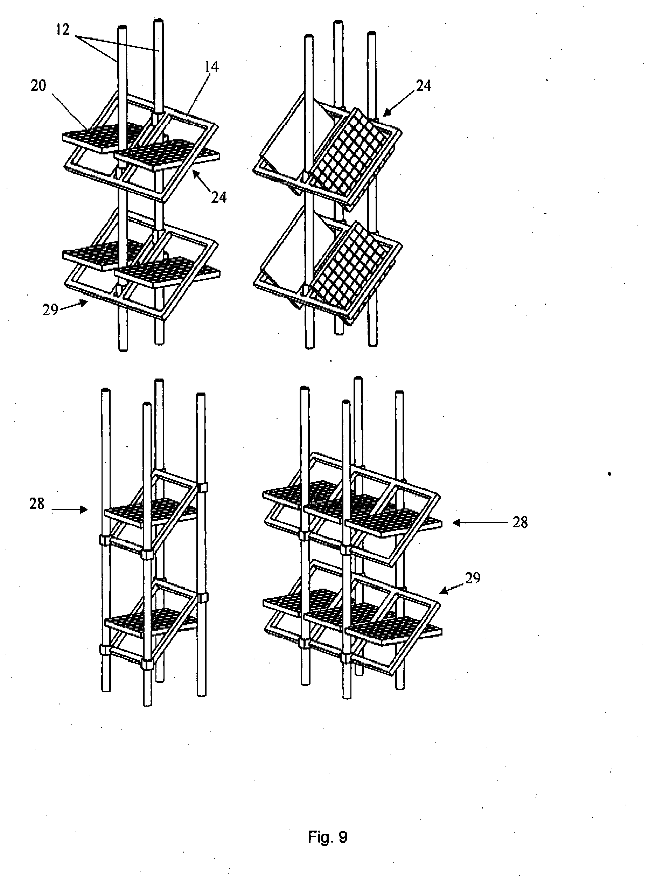

Figure 9 shows parts of support structures 10 of light installations 16 according to embodiments of the invention. The support structures 10 are each arranged to support a plurality of solar panels 20 in the same geographical orientation. Figure 9, which shows the solar panels 20 in a retracted position 28, shows that at least one spring-loaded hinge 24 may be provided at the top and bottom of a solar panel 20, rather than at its left and right sides of a solar panel.

It should be noted that a single support structure 10 may comprise any number and/or arrangement of the various cross members 14 shown and described herein. Each support structure 10 may support any number of solar panels 20, and need not necessarily consist of cross members 14 of the same type which each support the same number of solar panels 20 thereon.

According to an embodiment of the invention, the light installation 16 comprises at least one adjustment device that allows an operator to select a suitable or optimum operative position 26 as regards a direction in which a solar panel 20 faces and/or a tilt angle of the solar panel when in use. Alternatively, or additionally the light installation 16 may comprise a solar tracking mechanism for automatically changing the position and/or tilt angle of the at least one solar panel 20 as the position of the sun changes with respect to the at least one solar panel 20. The yield obtained from the solar panels 20 may thereby be maximised.

Figure 9 shows how a plurality of vertical struts, and a plurality of cross members may be used to form at least one closed frame 29 that is arranged to support at least one solar panel 20 in the first operational position 26. Each closed frame 29 may be inclined at the same angle as the at least one solar panel 20 when the at least one solar panel 20 is mounted on the support structure 10 and surrounds each solar panel 20 that is supported by the support structure 10.

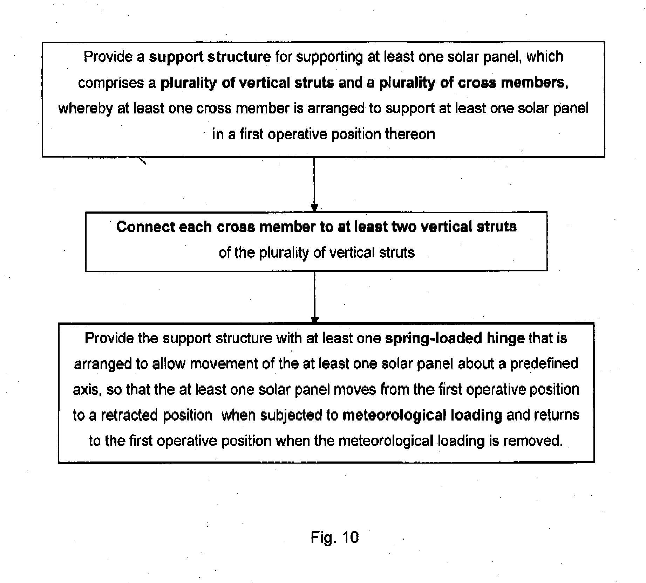

Figure 10 shows the steps of a method for providing a light installation according to embodiments of the invention. The method comprises the steps of providing a support structure 10 for supporting at least one solar panel 20, whereby the support structure 10 comprises a plurality of vertical struts 12, 12e, optionally whereby at least one of the vertical struts 12, 12e is arranged to extend from a surface 22 on which the light installation stands, providing a plurality of cross members 14, 14a, 14b whereby at least one cross member 14 is arranged to support at least one solar panel 20 in a first operative position 26 thereon, and connecting each cross member 14, 14a, 14b to at least two vertical struts 12, 12e of the plurality of vertical struts 12, 12e. The support structure 10 is arranged to bear the load of the at least one solar panel 20 when each cross member 14, 14a, 14b of the plurality of cross members 14, 14a, 14b has been connected to the at least two vertical struts 12, 12e of the plurality of vertical struts 12, 12e.

According to an embodiment of the invention, the method comprises the step of providing a plurality of vertical struts by retrofitting at least one vertical strut 12 to an existing lamppost 12e, whereby the existing lamppost 12e constitutes one vertical strut of the support structure 10.

According to an embodiment of the invention, the method comprises the step of providing the support structure 10 with at least one spring-loaded hinge 24 that is arranged to allow movement of the at least one solar panel 20 about a predefined axis, whereby the spring-loaded hinge 24 includes a resilient element, such as a spring, and the support structure 10 is arranged so that the at least one solar panel 20 moves from the first operative position 26 to a retracted position 28 when subjected to meteorological loading and returns to the first operative position 26 under the action of elastic potential energy stored in the resilient element when the meteorological loading is removed.

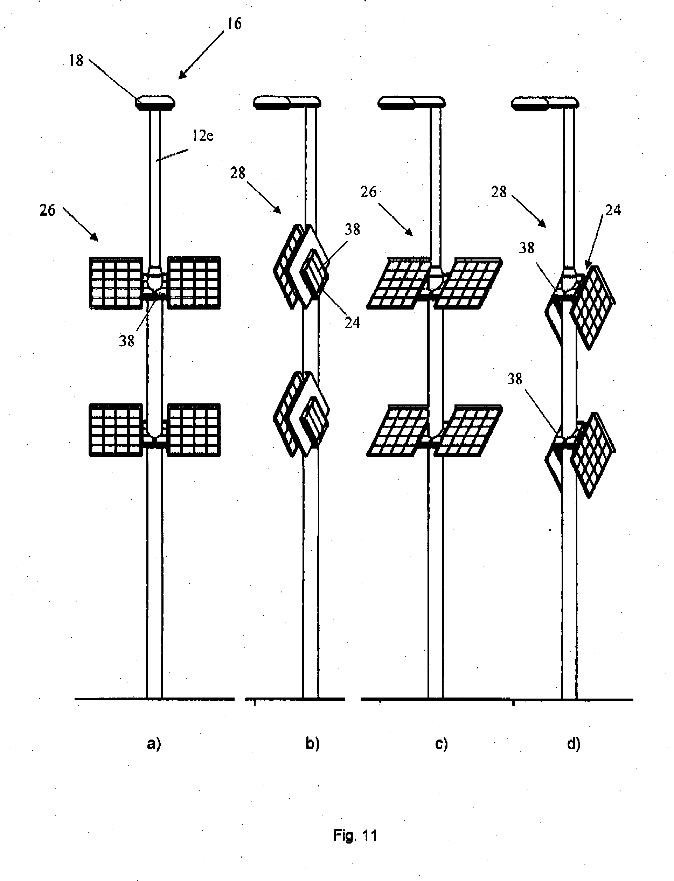

Figures 11a) to 11d) show a light installation comprising illumination means 12, such as an electric lamp and a lamppost 12e, whereby figure 11a) is a front view, and figures 11b), 11c) and 11d) are isometric views of the light installation.

Figures 11a) to 11d) show mounting devices 38 that allow at least one solar panel 20 to be mounted on the lamppost 12e and which comprise one or more spring-loaded hinges 24 that are arranged to allow each solar panel 20 to move about a predefined axis. Each mounting device allows a relative movement of each solar panel 20 with respect to a non-moving part 38a of the mounting device 38 or with respect to the lamppost 12e on which the mounting devices 38 are mounted. The spring-loaded hinges 22 each include a resilient element, such as a spring.

In the illustrated embodiment each mounting device 38 is arranged so that each solar panel 20 moves forwards through an angle of -90° from its original operative position to a retracted position 28, when subjected to meteorological loading which results in a force being applied to the back of the solar panels 20 and the back of the mounting device 38. The risk of the solar panels 20, the mounting devices 38 or the lamppost 12e being damaged by such meteorological loading is thereby reduced. Each solar panel 20 returns to its operative position 26, as shown in figure 11c) under the action of elastic potential energy stored in the resilient element of each spring-loaded hinge 24 when the meteorological loading has stopped or been reduced to a predetermined degree.

Figure 11d) shows a situation in which each mounting device 38 is arranged so that each solar panel 20 moves backwards through an angle of +90° from its operative position to a retracted position when subjected to meteorological loading which results in a force being applied to the front of the solar panels 20.

Such a mounting device 38 may be mounted on a vertical strut 12, 12e or a cross member 14 of a support member 10 of a light installation 16 according to the present invention. Alternatively, it may be mounted directly on an existing lamppost 12e or any other structural element on which at least one solar panel 20 is mounted.

In the embodiment shown in Figure 11, the support structure 10 comprises at least one spring-loaded hinge 24 that is arranged to allow movement of the at least one solar panel 20 about a predefined axis that extends from one side of the, or each, solar panel 20 to an opposing side of the, or each, solar panel 20 along one side of the, or each, solar panel 20 without passing through the centre of the, or each, solar panel 20 or in the vicinity of the centre of the, or each, solar panel 20.

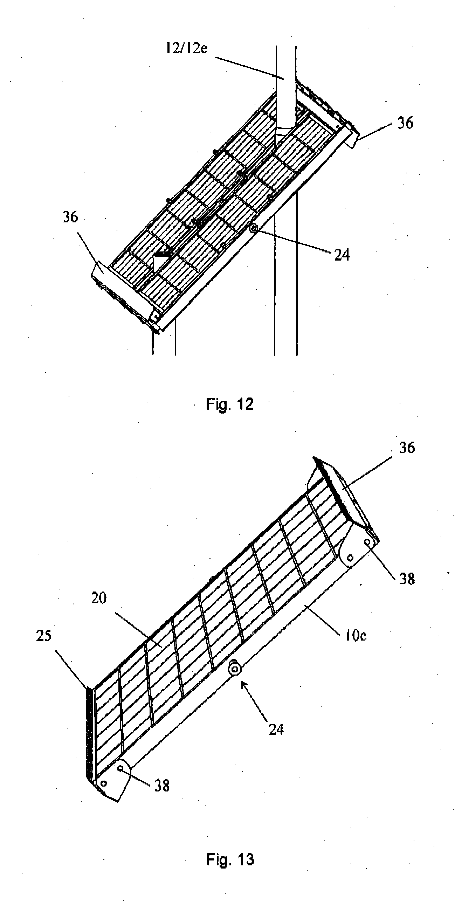

Figure 12 shows part of a support structure 10 of a light installation with spoilers 36 located on the support structure 10. The support structure 10 may be arranged so that at least one solar panel 20 moves from a first operative position 26 to a horizontal retracted position when subjected to meteorological loading in the form of a headwind or a tailwind, i.e., a wind coming from the front or the back of the solar panel 20 respectively. The support structure 10 may comprise at least one spoiler 36 to facilitate this rotation. One or more spoilers 36 may namely be provided on the support structure 10, such as in-front of or behind a solar panel 20. In the illustrated embodiment the spoilers 36 located on the support structure 10 create a negative pressure or an overpressure in the vicinity of the solar panel 20.

Figure 13 shows a solar panel 20 that may be supported on a support structure 10 of a light installation 16 according to an embodiment of the invention. At least one precipitation collector 25 may be attached to the solar panel 20 and/or at least one spoiler 36 may be attached to the solar panel 20 in any suitable location(s). A spoiler mounting used to attach a spoiler 36 may be provided at a corner of the solar panel 20, which may strengthen the frame of the solar panel 20.

A precipitation collector 25 is configured to collect precipitation falling on the precipitation collector 25 and/or running down the surface of the solar panel 20. The weight of precipitation acting on the precipitation collector 25 causes the solar panel 20 to move towards a vertical retracted position. A surface of a solar panel 20 may be provided with a water-repellent surface coating to facilitate such rotation.

A light installation 16 according to any of the embodiments of the invention may comprise at least one solar panel 20. The at least one solar panel 20 may comprise at least one of the following: a precipitation collector 25, a spoiler 36, a spoiler mounting attached at a corner of the at least one solar panel, a water-repelling surface coating.

According to an embodiment of the invention, the support structure 10 comprises a rear cover 10c that is located on the rear side of the, or each, solar panel 20 supported by the support structure 10 when the at least one solar panel 20 is mounted on the support structure 10. At least one spoiler 36 may be provided on and/or integrally formed with any part of the support structure 10, such as a rear cover 10c of the support structure 10.

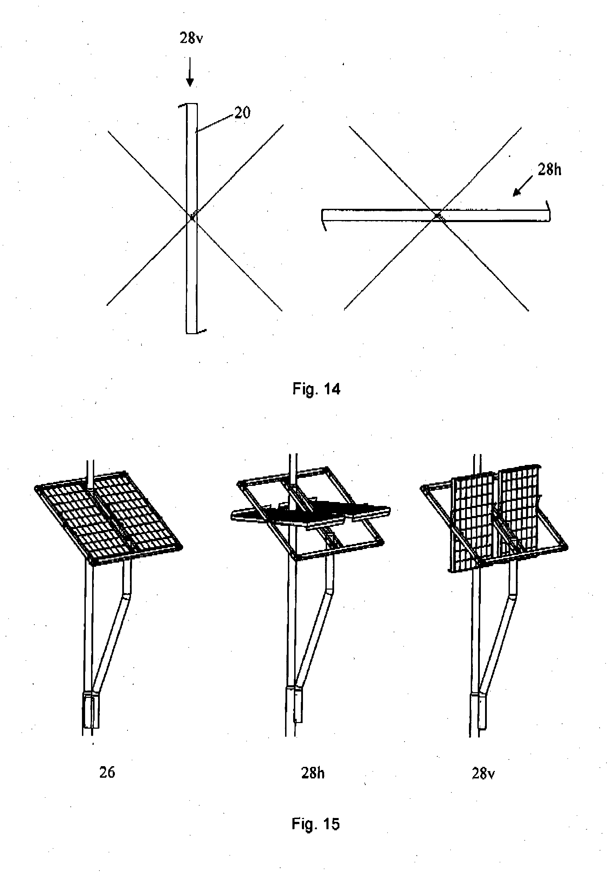

Figure 14 shows the positions between which a single solar panel 20 may be moved when mounted on a support structure 10 of a light installation 16 according to an embodiment of the invention.

Figure 15 shows solar panels 20 supported by a support structure 10 of a light installation 16 according to an embodiment of the invention in a first operational position 26, a horizontal retracted position 28h and a vertical retracted position 28v. A support structure 10 may be arranged to move each solar panel 20 between all three of these position or between at least a first operational position 26 and one of the retracted positions 28h and 28v.

The light installation according to the present invention allows a solar panel 20 to be rotated in any direction clockwise or anti-clockwise from the first operational position 26 depending on the direction of wind and/or whether any precipitation is acting on the solar panel 20 using a lightweight and simple support structure 10. In the absence of wind and precipitation acting on the solar panel 20, the support structure 10 maintains the solar panel in its first operational position 26.

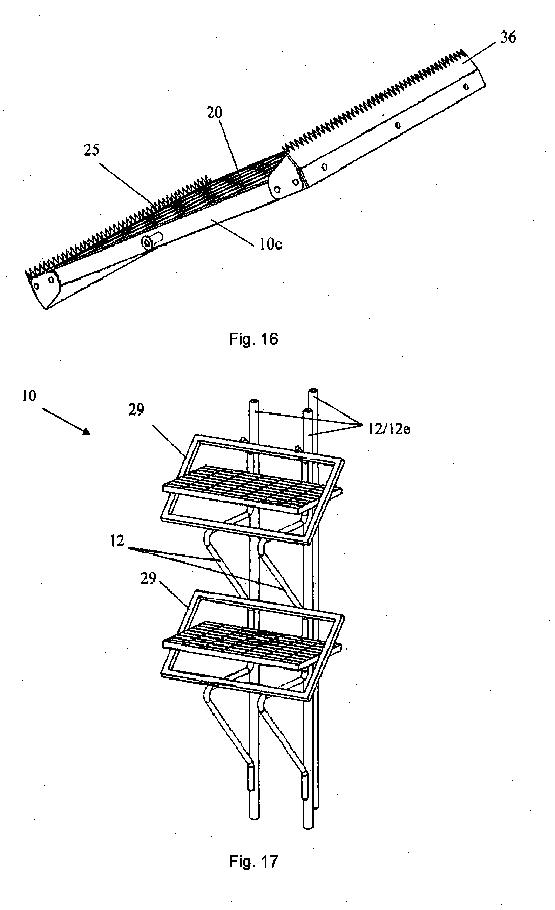

Figure 16 shows a solar panel 20 comprising a precipitation collector 25 and/or rear cover 10c comprising a spoiler 36. A precipitation collector 25 and/or a spoiler 36 may comprise means to prevent birds from landing on the light installation 16, such as a sharp or jagged edge. The jagged edge will also allow water to pass through the precipitation collector 25.

A support structure 10 and/or a precipitation collector 25 and/or a spoiler 36 according to any of the embodiments of the invention may comprise an engagement stop to prevent further rotation once a solar panel 20 has been moved to a retracted position 28.

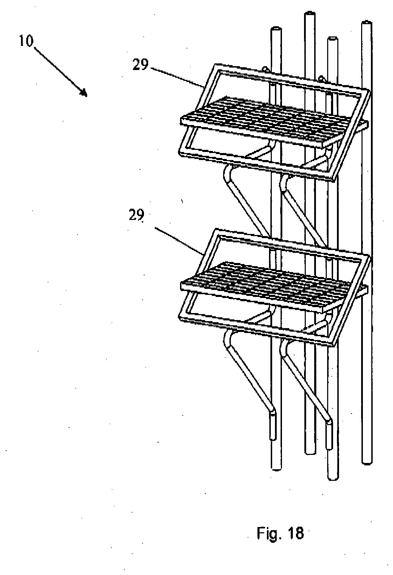

Figures 17 and 18 shows support structures 10 comprising a plurality of straight and curved vertical struts 12, which form a shelf brace. The support structures 10 also compirse a plurality of closed frames 29 according to further embodiments of the invention. The illustrated embodiments comprise additional structural elements extending between the closed frames 29. Such a support structure 10 may be used to reinforce an existing light installation, such as an existing light installation comprising a high mast, which may otherwise be too weak to support at least one solar panel 20.

Further modifications of the invention within the scope of the claims would be apparent to a skilled person.

### Aspects of the invention:

i. Light installation (16) comprising a support structure (10) for supporting at least one solar panel (20), whereby said support structure (10) comprises a plurality of vertical struts (12, 12e), optionally whereby at least one of said vertical struts (12, 12e) extends from a surface (22) on which said light installation (16) stands, whereby said support structure (10) comprises a plurality of cross members (14, 14a, 14b), whereby each cross member (14, 14a, 14b) is arranged to be connected to at least two vertical struts (12, 12e) of said plurality of vertical struts (12, 12e), and at least one cross member (14, 14a, 14b) is arranged to support at least one solar panel (20) in a first operative position (26) thereon, whereby said support structure (10) is arranged to bear the load of said at least one solar panel (20) when each cross member (14, 14a, 14b) of said plurality of cross members (14, 14a, 14b) has been connected to said at least two vertical struts (12, 12e) of said plurality of vertical struts (12, 12e).
ii. Light installation (16) according to aspect i, whereby one of said plurality of vertical struts (12, 12e) is an existing lamppost (12e) and at least one vertical strut (12) of said plurality of vertical struts (12, 12e) is arranged to be retrofitted to said existing lamppost (12e) to provide said plurality of vertical struts (12, 12e).
iii. Light installation (16) according to aspect i or ii, whereby at least part of said support structure (10) is arranged to be rotatable to enable said at least one solar panel (20) to be moved from said first operative position (26) to at least a second operative position.
iv. Light installation (16) according to any of the preceding aspects whereby said support structure (10) comprises at least one spring-loaded hinge (24) that is arranged to allow movement of said at least one solar panel (20) about a predefined axis, whereby said spring-loaded hinge (24) includes a resilient element, such as a spring, and said support structure (10) is arranged so that said at least one solar panel (20) moves from said first operative position (26) to a retracted position (28) when subjected to meteorological loading and returns to said first operative position (26) under the action of elastic potential energy stored in said resilient element when said meteorological loading is removed.
v. Light installation (16) according to any of the preceding aspects, whereby said support structure (10) is arranged to support a plurality of solar panels (20) vertically, one above the other, or in pairs or groups, one pair or group above another, at a plurality of different heights, or in a staggered manner.
vi. Light installation (16) according to any of the preceding aspects whereby at least one vertical strut (12) of said vertical struts (12, 12e) and/or at least one cross member (14, 14a, 14b) of said plurality of cross members (14, 14a, 14b) comprises, or consists of transparent material, and/or said support structure (10) comprises at least one light-reflecting surface (32), such as a mirror or prism, to counteract shading of said at least one solar panel's (20) active surface.
vii. Light installation (16) according to any of the preceding aspect, whereby at least one of said plurality of vertical struts (12, 12e) and/or at least one of plurality of cross members (14, 14a, 14b) is/are curved and/or hollow.
viii. Method for providing a light installation (16), whereby it comprises the steps of:
   - providing a support structure (10) for supporting at least one solar panel (20), whereby said support structure (10) comprises a plurality of vertical struts (12, 12e), optionally whereby at least one of said vertical struts (12, 12e) is arranged to extend from a surface (22) on which said light installation (16) stands,
   - providing a plurality of cross members (14, 14a, 14b) whereby at least one cross member (14, 14a, 14b) is arranged to support at least one solar panel (20) in a first operative position (26) thereon, and
   - connecting each cross member (14, 14a, 14b) to at least two vertical struts (12, 12e) of said plurality of vertical struts (12, 12e); whereby said support structure (10) is arranged to bear the load of said at least one solar panel (20) when each cross member (14, 14a, 14b) of said plurality of cross members (14, 14a, 14b) has been connected to said at least two vertical struts (12, 12e) of said plurality of vertical struts (12, 12e).
ix. Method for retrofitting a support structure (10) for supporting at least one solar panel (20) to an existing lamppost (12e), whereby it comprises the steps of:
   - providing at least one vertical strut (12) optionally whereby said at least one vertical strut (12) is arranged to extend from a surface (22) on which said light installation (16) stands,
   - providing a plurality of cross members (14, 14a, 14b) whereby at least one cross member (14, 14a, 14b) is arranged to support at least one solar panel (20) in a first operative position (26) thereon, and
   - connecting each cross member (14, 14a, 14b) to said existing lamppost (12e) and said at least one vertical strut (12), whereby said existing lamppost (12e) and said at least one vertical strut (12) constitute a support structure (10) that is arranged to bear the load of said at least one solar panel (20) when each cross member (14, 14a, 14b) of said plurality of cross members (14, 14a, 14b) has been connected to said existing lamppost (12e) and said at least one vertical strut (12).
x. Method according to aspect viii or ix, whereby it comprises the step of providing said support structure (10) with at least one spring-loaded hinge (24) that is arranged to allow movement of said at least one solar panel (20) about a predefined axis, whereby said spring-loaded hinge (24) includes a resilient element, such as a spring, and said support structure (10) is arranged so that said at least one solar panel (20) moves from said first operative position (26) to a retracted position (28) when subjected to meteorological loading and returns to said first operative position (26) under the action of elastic potential energy stored in said resilient element when said meteorological loading is removed.

## Claims

1. Light installation (16) comprising a support structure (10) for supporting at least one solar panel (20), whereby said support structure (10) comprises a plurality of vertical struts (12, 12e), whereby said support structure (10) comprises a plurality of cross members (14, 14a, 14b), whereby each cross member (14, 14a, 14b) is arranged to be connected to at least two vertical struts (12, 12e) of said plurality of vertical struts (12, 12e), and at least one cross member (14, 14a, 14b) is arranged to support at least one solar panel (20) in a first operative position (26) thereon, whereby said support structure (10) is arranged to bear the load of said at least one solar panel (20) when each cross member (14, 14a, 14b) of said plurality of cross members (14, 14a, 14b) has been connected to said at least two vertical struts (12, 12e) of said plurality of vertical struts (12, 12e), **characterized In that** said support structure (10) comprises at least one spring-loaded hinge (24) that is arranged to allow movement of said at least one solar panel (20) about a predefined axis, whereby said spring-loaded hinge (24) includes a resilient element, such as a spring, and said support structure (10) is arranged so that said at least one solar panel (20) moves from said first operative position (26) to a retracted position (28) when subjected to meteorological loading and returns to said first operative position (26) under the action of elastic potential energy stored in said resilient element when said meteorological loading is removed.

2. Light installation (16) according to claim 1, **characterized in that** one of said plurality of vertical struts (12, 12e) is an existing lamppost (12e) and at least one vertical strut (12) of said plurality of vertical struts (12, 12e) is arranged to be retrofitted to said existing lamppost (12e) to provide said plurality of vertical struts (12, 12e).

3. Light installation (16) according to any of the preceding claims, **characterized in that** said support structure (10) is arranged to support a plurality of solar panels (20) vertically, one above the other, or in pairs or groups, one pair or group above another, at a plurality of different heights, or in a staggered manner.

4. Light installation (16) according to any of the preceding claims, **characterized in that** at least one vertical strut (12) of said vertical struts (12, 12e) and/or at least one cross member (14, 14a, 14b) of said plurality of cross members (14, 14a, 14b) comprises, or consists of transparent material, and/or said support structure (10) comprises at least one light-reflecting surface (32), such as a mirror or prism, to counteract shading of said at least one solar panel's (20) active surface.

5. Light installation (t6) according to any of the preceding claims, **characterized in that** at least one of said plurality of vertical struts (12, 12e) and/or at least one of plurality of cross members (14, 14a, 14b) is/are curved and/or hollow.

6. Light installation (16) according to any of the preceding claims, **characterized In that** said support structure (10) comprises at least one closed frame (29) that is arranged to support said at least one solar panel (20) in said first operational position (26).

7. Light installation (16) according to any of the preceding claims, **characterized In that** said predefined axis extends from one side of the, or each, solar panel (20) to an opposing side of the, or each, solar panel (20) optionally through a centre of the, or each, solar panel (20) or through the, or each, solar panel in the vicinity of the centre of the, or each, solar panel (20)

8. Light installation (16) according to any of the preceding claims, **characterized In that** said support structure (10) is arranged so that said at least one solar panel (20) rotates from said first operative position (26) to a horizontal retracted position (28h) when subjected to meteorological loading in the form of a headwind or a tailwind, and said support structure (10) and/or the at least one solar panel (20) comprises at least one spoiler (36) to facilitate said rotation.

9. Light installation (16) according to any of the preceding claims, **characterized in that** said support structure (10) comprises mechanical fasteners and said at least one solar panel (20) and/or said at least one spoiler (36) is/are attached to said support structure (10) and/or the at least one solar panel (20) by means of said mechanical fasteners.

10. Method for providing a light installation (16), which comprises the steps of:
- providing a support structure (10) for supporting at least one solar panel (20), whereby said support structure (10) comprises a plurality of vertical struts (12, 12e),
- providing a plurality of cross members (14, 14a, 14b) whereby at least one cross member (14, 14a, 14b) is arranged to support at least one solar panel (20) in a first operative position (26) thereon, and
- connecting each cross member (14, 14a, 14b) to at least two vertical struts (12, 12e) of said plurality of vertical struts (12, 12e), whereby said support structure (10) is arranged to bear the load of said at least one solar panel (20) when each cross member (14, 14a, 14b) of said plurality of cross members (14, 14a, 14b) has been connected to said at least two vertical struts (12, 12e) of said plurality of vertical struts (12, 12e), **characterized In that** it comprises the step of the step of providing said support structure (10) with at least one spring-loaded hinge (24) that is arranged to allow movement of said at least one solar panel (20) about a predefined axis, whereby said spring-loaded hinge (24) includes a resilient element, such as a spring, and said support structure (10) is arranged so that said at least one solar panel (20) moves from said first operative position (26) to a retracted position (28) when subjected to meteorological loading and returns to said first operative position (26) under the action of elastic potential energy stored in said resilient element when said meteorological loading is removed.

11. Method for retrofitting a support structure (10) for supporting at least one solar panel (20) to an existing lamppost (12e), which comprises the steps of:
- providing at least one vertical strut (12),
- providing a plurality of cross members (14, 14a, 14b) whereby at least one cross member (14, 14a, 14b) is arranged to support at least one solar panel (20) in a first operative position (26) thereon, and
- connecting each cross member (14, 14a, 14b) to said existing lamppost (12e) and said at least one vertical strut (12), whereby said existing lamppost (12e) and said at least one vertical strut (12) constitute a support structure (10) that is arranged to bear the load of said at least one solar panel (20) when each cross member (14, 14a, 14b) of said plurality of cross members (14, 14a, 14b) has been connected to said existing lamppost (12e) and said at least one vertical strut (12) **characterized in that** it comprises the step of the step of providing said support structure (10) with at least one spring-loaded hinge (24) that is arranged to allow movement of said at least one solar panel (20) about a predefined axis, whereby said spring-loaded hinge (24) includes a resilient element, such as a spring, and said support structure (10) is arranged so that said at least one solar panel (20) moves from said first operative position (26) to a retracted position (28) when subjected to meteorological loading and returns to said first operative position (26) under the action of elastic potential energy stored in said resilient element when said meteorological loading is removed.

12. Method according to claim 10 or 11, **characterized in that** said predefined axis extends from one side of the, or each, solar panel (20) to an opposing side of the, or each, solar panel (20) through a centre of the, or each, solar panel (20) or through the, or each, solar panel in the vicinity of the centre of the, or each, solar panel (20)

13. Method according to any of claims 10-12, **characterized in that** it comprises the step of arranging said support structure (10) so that said at least one solar panel (20) rotates from said first operative position (26) to a vertical retracted position (28v) when subjected to meteorological loading in the form of precipitation, and providing said support structure (10) with a precipitation collector (25) to facilitate said rotation.

14. Method according to any of claims 10-13, **characterized In that** it comprises the step of arranging said support structure (10) so that said at least one solar panel (20) rotates from said first operative position (26) to a horizontal retracted position (28h) when subjected to meteorological loading in the form of a headwind or a tailwind, and providing said support structure (10) with at least one spoiler (36) to facilitate said rotation.

15. Method according to any of claims 10-14, **characterized in that** it comprises the step of attaching said at least one solar panel (20) and/or said at least one spoiler (36) to said support structure (10) by means of mechanical fasteners.
